# DEMANDE DE BREVET EUROPEEN

(11) **EP 1 876 743 A2**
(43) Date de publication de la demande: **09.01.2008**
(21) Numéro de dépôt: 07111560.4
(22) Date de dépôt: 02.07.2007
(51) Int. Cl.: H04J 14/02, H04Q 11/00

(54) **Dispositif reconfigurable de multiplexage optique à insertion/extraction comportant des modules d'insertion/extraction sécurisés de type WSS**

(30) Priorité: 06.07.2006 FR 0652819
(71) Demandeur: Alcatel Lucent, 75008 Paris (FR)
(72) Inventeur: Zami, Thierry, 91300, MASSY (FR); Prunaire, Magali, 91620, NOZAY (FR)
(74) Mandataire: Thibaud, Jean-Baptiste

(57) **Abrégé**

Le domaine de l'invention est celui des dispositifs reconfigurables de multiplexage optique à insertion/extraction de type ROADM. Le ROADM selon l'invention est un dispositif sécurisé qui comporte au moins une entrée optique (E) et une sortie optique (S), ledit dispositif comprenant :
• Un premier commutateur à sélection de longueur d'onde utilisé en tant que multiplexeur (WSS1) ;
• Un second commutateur à sélection de longueur d'onde (WSS2) utilisé en tant que démultiplexeur ;
• Un moyen de liaison (Ci) reliant l'entrée optique (E) du dispositif de multiplexage aux entrées des premier et second commutateurs à sélection de longueur d'onde ;
• Un coupleur optique (C_{Y2}) reliant les sorties des premier et second commutateurs à sélection de longueur d'onde à la sortie optique (E) du dispositif de multiplexage.

## Description

Le domaine de l'invention est celui des dispositifs reconfigurables de multiplexage optique à insertion/extraction. Ces dispositifs sont plus connus sous leur terminologie anglo-saxonne de ROADM signifiant Reconfigurable Optical Add-Drop Multiplexer.

Les réseaux modernes de télécommunications par fibres optiques sont de plusieurs catégories. On distingue les réseaux longues distances déployés à l'échelle d'un pays ou d'un continent, les réseaux métropolitains encore appelés réseaux intermédiaires mis en oeuvre à l'échelle d'une agglomération et enfin les réseaux locaux encore appelés réseaux de distribution ou réseaux d'accès. Ils représentent le dernier maillon de cette chaîne et finissent d'acheminer les informations à l'abonné.

La topologie des réseaux métropolitains optiques est généralement constituée de lignes de communication reliées entre elles par des dispositifs comprenant essentiellement des multiplexeurs d'insertion/extraction optiques appelés ROADM qui permettent d'assurer les fonctions suivantes :
• Extraction de données encore appelée fonction « drop » ;
• Insertion de données encore appelée fonction « add» ;
• Suppression ou transfert des données entre la fibre d'entrée et la fibre de sortie.

Lorsqu'on souhaite transmettre dans une même fibre optique un nombre important de canaux comportant des débits d'informations élevés, on utilise généralement le multiplexage en longueur d'onde encore appelé en terminologie anglo-saxonne WDM, acronyme signifiant Wavelength Division Multiplexing. Le principe mis en oeuvre consiste à coupler dans une seule fibre optique, au moyen de dispositifs optiques appropriés, plusieurs porteuses optiques à des longueurs d'onde voisines transmettant chacune des canaux d'informations différents. Des dispositifs optiques similaires sont utilisés en sortie de fibre pour séparer les différents canaux spectraux. On peut ainsi atteindre des débits de transmission de plusieurs centaines de Gbits/s.

Dans ce cadre, de nouveaux composants ont été récemment développés. Il s'agit de composants dits commutateurs à sélection de longueurs d'onde, mieux connus sous leur acronyme anglo-saxon de « WSS » signifiant « Wavelength Selective Switch », acronyme que l'on utilisera désormais dans la suite de la description. Le principe d'un module WSS consiste à intégrer dans un même composant à la fois les fonctions de multiplexage ou de démultiplexage et les fonctions de commutation. On peut ainsi réaliser des architectures de ROADM compactes.

On entend ici par commutateur à sélection de longueurs d'onde un équipement comportant, d'une part, une pluralité de ports sélectionnables et d'autre part, un port commun.

Lorsqu'il agit en tant que démultiplexeur, les ports sélectionnables servent de sorties et le port commun sert d'entrée commune. Le commutateur à sélection de longueurs d'onde est capable d'aiguiller chaque canal spectral reçu sur son entrée commune, de façon sélective en fonction d'un signal de commande, vers l'une de ses sorties. Cet équipement réalise ainsi une fonction de démultiplexage programmable sur des signaux optiques, encore appelés canaux spectraux, portés par des longueurs d'onde optiques différentes et dont les fréquences optiques sont alignées sur une grille prédéterminée, permettant ainsi que chaque canal présent à l'entrée commune soit dirigé vers l'un des ports de sortie en fonction de sa longueur d'onde et d'une commande. Chaque port de sortie peut donc recevoir sélectivement un canal présent à l'entrée commune, plusieurs canaux présent à l'entrée commune ou aucun canal. La fonction de suppression ou de blocage d'un canal peut être intégrée par construction dans un commutateur à sélection de longueurs d'onde. Dans ce cas, le canal est orienté vers un endroit spécifique du commutateur à sélection de longueurs d'onde où il est absorbé.

Ce même équipement peut aussi réaliser la fonction inverse, i.e. le multiplexage programmable, en échangeant les rôles des sorties et de l'entrée. Dans ce cas, les ports sélectionnables servent d'entrées et le port commun sert de sortie commune. Le commutateur à sélection de longueurs d'onde est capable d'aiguiller des canaux spectraux (c'est-à-dire des signaux optiques portés par des longueurs d'onde respectives) reçus sur des entrées respectives, sélectivement en fonction des longueurs d'onde des canaux reçus et des entrées respectives et en fonction d'un signal de commande, vers la sortie commune de cet équipement. Il convient bien entendu que les canaux spectraux aiguillés vers la sortie commune aient des longueurs d'onde différentes. L'équipement réalise alors une fonction de multiplexage programmable permettant de fournir en sortie un canal sélectionné parmi les canaux reçus sur les entrées ou un multiplex de sortie constitué d'un ensemble de canaux sélectionnés parmi les canaux reçus. Sur chaque port d'entrée, on peut envoyer un canal, plusieurs canaux ou aucun canal. Dans ce cas également, un canal présent sur un port d'entrée et devant être bloqué est orienté vers un endroit spécifique du commutateur à sélection de longueurs d'onde où il est absorbé.

On sait que, dans un ROADM, il est nécessaire de réaliser au moins deux fonctions, une première fonction d'extraction de données et une seconde fonction d'insertion de données. La fonction d'extraction peut être réalisée au moyen d'un module WSS. La fonction d'insertion peut être réalisée au moyen d'un module d'émission comprenant plusieurs sources d'émission, chaque source étant couplée au moyen d'un coupleur optique à multivoies à une fibre unique de sortie.

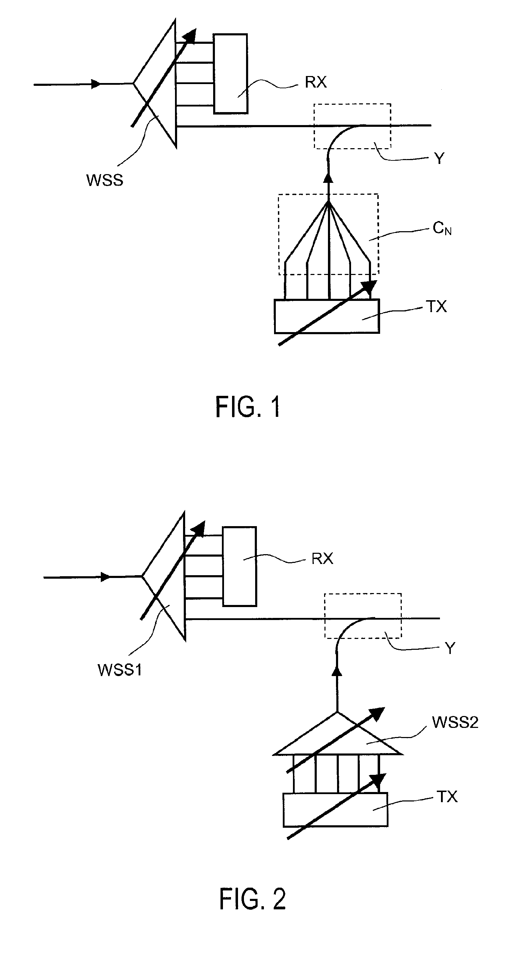

Or, dès que le nombre de canaux devient significatif, en pratique supérieur à 4, les pertes d'insertion du coupleur deviennent prohibitives et il devient plus intéressant de remplacer le coupleur par un module WSS qui réalise la même fonction. Par conséquent, dès que le nombre de canaux est important, il est nécessaire qu'un ROADM à base de WSS comporte deux modules WSS, le premier destiné à l'extraction des données et le second à leur insertion. C'est ce qu'illustrent les figures 1 et 2. Dans ces figures et dans celles qui suivent, on a adopté les conventions de représentation suivantes :
• Les WSSs sont représentés symboliquement par un triangle barré d'une flèche, la flèche symbolisant la commutation. Les ports sélectionnables se situent à la base du triangle. Le port commun se situe à la pointe du triangle.
• Les rectangles notés RXs symbolisent des modules de réception composés de photorécepteurs disposés à la sortie des modules WSS et destinés à recevoir des signaux monochromatiques démultiplexés.
• Les rectangles notés TXs symbolisent des modules d'émission composés d'émetteurs monochromatiques de type laser et disposés à l'entrée des modules WSS.
• Les ronds noirs symbolisent les différentes entrées/sorties des composants.

Dans le cas de la figure 1, la fonction « drop » est assurée par le premier module WSS et la fonction « add » est assurée par un module d'émission TX, un coupleur N voies C_{N}, et un coupleur Y permettant l'injection dans la fibre de sortie du ROADM des données issues de ce module TX. Dans le cas de la figure 2, la fonction « drop » est assurée par un premier module WSS1, la fonction « add » est assurée par un second module WSS2 et un coupleur Y permettant l'injection des données issues de WSS2 dans la fibre de sortie du ROADM.

Le haut niveau d'intégration nécessaire à la réalisation des WSSs fait que la panne de ce type de composant a des conséquences importantes sur le bon fonctionnement de l'ensemble du ROADM. Une fonction prioritaire dont la fiabilité doit être excellente est la transmission des données à travers le WSS. Or la panne d'un WSS ne permet pas de garantir cette fonctionnalité.

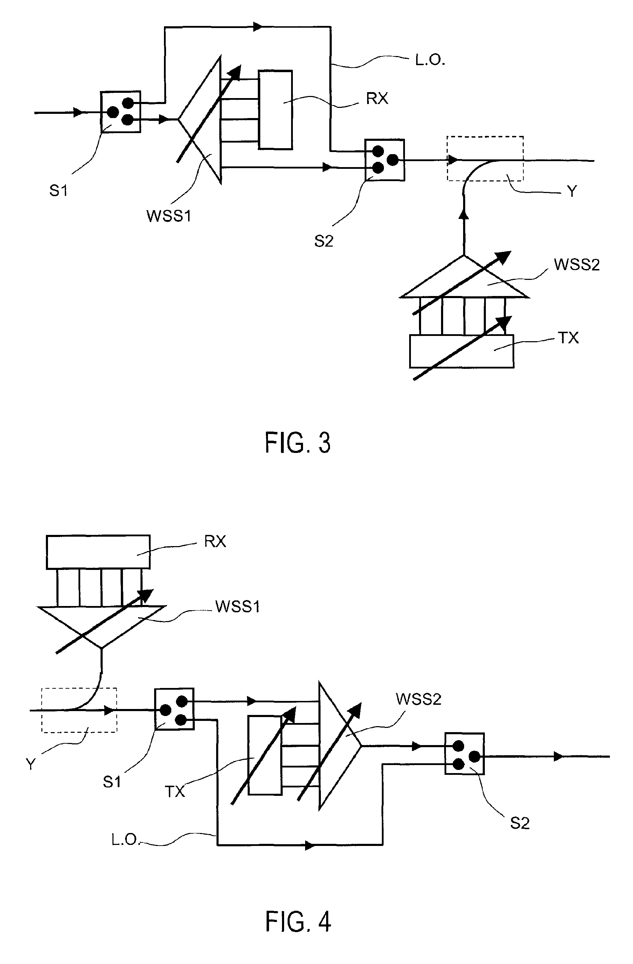

Aussi, pour pallier cet inconvénient, on peut concevoir des implantations de ROADM protégées. A titre d'exemple, les figures 3 et 4 illustrent ce type d'implantation. Le coeur de la protection est constituée par une ligne de transmission L.O. et deux commutateurs S1 et S2 disposés à l'entrée et à la sortie des modules WSS. Lorsque le WSS fonctionne nominalement, les commutateurs sont disposés de telle sorte que le signal lui soit envoyé. Lorsque le WSS ne fonctionne plus nominalement, les commutateurs sont disposés de telle sorte que le signal circule au travers de la ligne de transmission L.O. qui contourne le WSS. Comme illustré en figures 3 et 4, l'ensemble de protection constitué par les commutateurs et la ligne de protection peut être situé soit sur le WSS1 dédié à la fonction « drop », soit sur le WSS2 dédié à la fonction « add ». Dans les deux cas, la transmission des données est assurée en cas de panne d'au moins un des deux WSSs. Ce dispositif présente cependant encore certains inconvénients. D'une part, bien entendu, les commutateurs employés pour la protection doivent avoir une très haute fiabilité. D'autre part, lorsque la fonction de protection est activée, il devient impossible d'éliminer un signal à une longueur d'onde donnée pour le remplacer par un autre. L'insertion de données est donc, par la nature même de la protection, fortement perturbée.

Aussi, le dispositif selon l'invention propose un agencement sécurisé de deux WSSs nécessaires aux fonctions d'insertion et d'extraction disposés de façon que la panne d'un module WSS permet encore la transmission transparente du signal entrant.

Plus précisément, l'invention a pour objet un dispositif de multiplexage optique à insertion/extraction comportant au moins une entrée optique et une sortie optique, les signaux optiques circulant de l'entrée optique vers la sortie optique, ledit dispositif comprenant :
• Un premier commutateur à sélection de longueur d'onde utilisé en tant que multiplexeur possédant au moins un premier port d'entrée, un premier port de sortie, et un ou plusieurs ports dédiés à l'insertion de signaux ;
• Un second commutateur à sélection de longueur d'onde utilisé en tant que démultiplexeur possédant au moins un second port d'entrée, un second port de sortie et un ou plusieurs ports dédiés à l'extraction de signaux ;
caractérisé en ce que le dispositif comporte également :
• Un moyen de liaison comprenant une entrée et deux sorties, ladite entrée étant reliée à l'entrée optique du dispositif de multiplexage, lesdites sorties étant reliées respectivement au premier port d'entrée du premier commutateur à sélection de longueur d'onde et au second port d'entrée du second commutateur à sélection de longueur d'onde ;
• Un premier coupleur optique comprenant une sortie et deux entrées, ladite sortie étant reliée à la sortie optique du dispositif de multiplexage, lesdites entrées étant reliées respectivement au premier port de sortie du premier commutateur à sélection de longueur d'onde et au second port de sortie du second commutateur à sélection de longueur d'onde.

Selon une réalisation particulière, le moyen de liaison est un commutateur spatial agencé de façon que l'entrée dudit commutateur spatial puisse être reliée, sur commande, soit à la première sortie, soit à la seconde sortie dudit commutateur.

Avantageusement, on prévoit une unité de commande apte à commander ledit commutateur spatial de manière à diriger les signaux entrants vers le second commutateur à sélection de longueurs d'onde dans un état normal, et à diriger les signaux entrants vers le premier commutateur à sélection de longueurs d'onde en cas de panne du second commutateur à sélection de longueurs d'onde.

Selon une autre réalisation particulière, le moyen de liaison est un coupleur agencé de façon que l'entrée dudit coupleur soit reliée aux sorties dudit coupleur.

Avantageusement, le dispositif de multiplexage optique à insertion/extraction selon l'invention peut comprendre également :
• Un premier commutateur spatial de sécurité à deux positions ;
• Un second commutateur spatial de sécurité à deux positions ;
• Un dispositif de sécurité comprenant un troisième commutateur spatial et des moyens d'insertion/extraction, ledit commutateur spatial étant relié d'une part au premier commutateur spatial à deux positions et au second commutateur spatial à deux positions et d'autre part aux moyens d'insertion/extraction ;
lesdits commutateurs spatiaux étant agencés de façon qu'en cas de panne d'un des deux commutateurs à sélection de longueur d'onde, la fonction dudit commutateur en panne soit assurée par les moyens d'insertion/extraction du dispositif de sécurité.

L'invention concerne également un système de multiplexage optique à insertion/extraction comportant deux voies, par exemple la première voie destinée à traiter les signaux optiques circulant dans un premier sens et la seconde voie destinée à traiter les signaux optiques circulant dans le sens opposé, chaque voie comportant un dispositif de multiplexage optique à insertion/extraction comme précédemment défini, le dispositif de sécurité étant commun aux deux voies.

Avantageusement, les moyens d'insertion/extraction du dispositif de sécurité du système de multiplexage optique à insertion/extraction comportent un commutateur à sélection de longueur d'onde supplémentaire, les ports sélectionnables dudit commutateur étant reliés, par l'intermédiaire de commutateurs spatiaux ou de circulateurs optiques à trois voies, soit à un module de réception, soit à un module d'émission.

Selon un mode de réalisation préféré, on prévoit une unité de commande apte à commander les premier, deuxième et troisième commutateurs spatiaux de façon qu'en cas de panne d'un des deux ou des quatre commutateurs à sélection de longueur d'onde, la fonction d'insertion ou d'extraction dudit commutateur à sélection de longueur d'onde en panne soit assurée par les moyens d'insertion/extraction du dispositif de sécurité.

L'invention sera mieux comprise et d'autres avantages apparaîtront à la lecture de la description qui va suivre donnée à titre non limitatif et grâce aux figures annexées parmi lesquelles :
• La figure 1 représente un premier dispositif de multiplexage optique à insertion/extraction selon l'art antérieur ;
• La figure 2 représente un second dispositif de multiplexage optique à insertion/extraction selon l'art antérieur ;
• La figure 3 représente un dispositif de multiplexage optique à insertion/extraction protégé selon un premier mode de réalisation utile à la compréhension de l'invention ;
• La figure 4 représente un dispositif de multiplexage optique à insertion/extraction protégé selon un deuxième mode de réalisation utile à la compréhension de l'invention ;
• La figure 5 représente un dispositif de multiplexage optique à insertion/extraction mono-voie selon un mode de réalisation général ;
• La figure 6 représente un premier mode de réalisation d'un dispositif mono-voie selon l'invention ;
• La figure 7 représente un second mode de réalisation d'un dispositif mono-voie selon l'invention ;
• La figure 8 représente un dispositif mono-voie sécurisé selon un mode de réalisation de l'invention ;
• La figure 9 représente une variante du dispositif de sécurité de la figure 8 ;
• La figure 10 représente un dispositif de multiplexage optique à insertion/extraction bi-voie selon un mode de réalisation de l'invention.

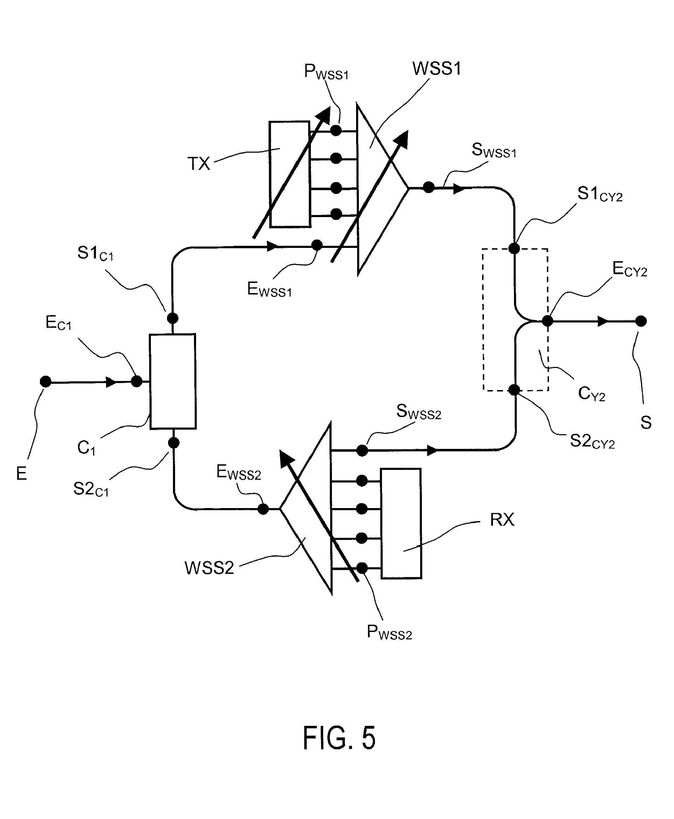

A titre d'exemple non limitatif, la figure 5 représente un dispositif de multiplexage optique à insertion/extraction mono-voie selon un mode de réalisation de l'invention. Le dispositif comporte une entrée optique E et une sortie optique S. Les signaux optiques multiplexés proviennent d'une section optique qui ne sera pas détaillée ici et sont transmis à l'entrée optique. Les signaux optiques traités par le dispositif optique sont transmis à la sortie optique vers une seconde section optique. Le dispositif de multiplexage optique à insertion/extraction réalise les fonctions classiques d'un ROADM, c'est-à-dire extraction de canaux spectraux portant des données - insertion de canaux spectraux portant des données - suppression ou transmission transparente de canaux spectraux en transit portant des données. Entre son entrée E et sa sortie S, il comporte essentiellement :
• Un premier ensemble opto-électronique comportant :
   • Un premier commutateur à sélection de longueur d'onde utilisé en tant que multiplexeur WSS1 possédant au moins un premier port d'entrée E_{WSS1}, un premier port de sortie S_{WSS1} et des ports dédiés à l'insertion de signaux P_{WSS1} ;
   • Un module d'émission TX composé d'émetteurs monochromatiques de type laser, pouvant être accordables ou non accordables, et dont les sorties sont reliées aux ports P_{WSS1} dédiés à l'insertion de signaux.
• Un second ensemble opto-électronique comportant
   • Un second commutateur à sélection de longueur d'onde WSS2 utilisé en tant que démultiplexeur possédant au moins un second port d'entrée E_{WSS2}, un second port de sortie S_{WSS2} et des ports dédiés à l'extraction de signaux P_{WSS2} ;
   • Un module de réception RX composé de photo-récepteurs et dont les entrées sont reliées aux ports P_{WSS2} dédiés à l'extraction de signaux ;
• Un moyen de liaison C₁ comprenant une entrée E_{C1} et deux sorties S1_{C1} et S2_{C1}, l'entrée E_{C1} étant reliée à l'entrée optique E du dispositif de multiplexage, les sorties S1_{C1} et S2_{C1} étant reliées respectivement au premier port d'entrée E_{WSS1} du premier commutateur à sélection de longueur d'onde WSS1 et au second port d'entrée E_{WSS2} du second commutateur à sélection de longueur d'onde WSS2 ;
• Un premier coupleur optique C_{Y2} comprenant une sortie E_{C2} et deux entrées S1C₂ et S2_{C2}, ladite sortie E_{C2} étant reliée à la sortie optique S du dispositif de multiplexage, les entrées S1_{CY2} et S2_{CY2} étant reliées respectivement au port de sortie S_{WSS1} du premier commutateur à sélection de longueur d'onde WSS1 et au port de sortie S_{WSS2} du second commutateur à sélection de longueur d'onde WSS2.

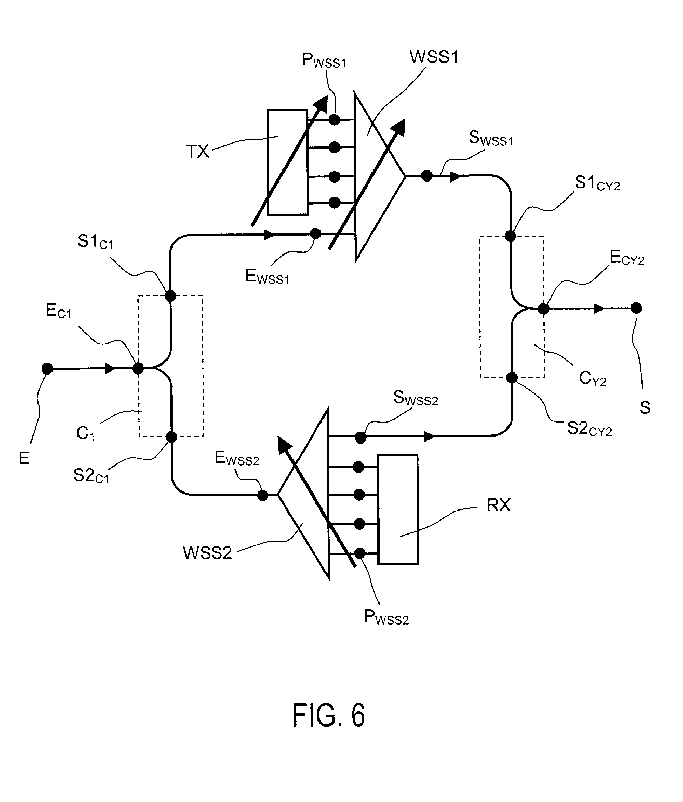

Il existe deux principaux modes de réalisation du moyen de liaison C₁. Dans un premier mode de réalisation décrit en figure 6, le moyen de liaison est un coupleur optique agencé de façon que son entrée E_{C1} soit reliée à la sortie S1_{C1} et à la sortie S2_{C1} dudit coupleur. Dans ce cas, les signaux entrants atteignent les deux commutateurs à sélection de longueur d'onde WSS1 et WSS2. Dans un état normal, i.e. en l'absence de panne des commutateurs à sélection de longueur d'onde WSS1 et WSS2, un seul des deux commutateurs, par exemple WSS2, laisse passer les canaux spectraux devant être transmis directement, tandis que l'autre commutateur, par exemple WSS1, les bloque. Ainsi, on évite des interférences perturbatrices au niveau du coupleur optique C_{Y2}. De préférence, on prévoit une unité de commande des commutateurs à sélection de longueur d'onde WSS1 et WSS2, non représentée, qui est apte à rendre passant ledit autre commutateur, pour le trafic de transit, en cas de défaillance du commutateur qui était initialement passant. Ainsi, en cas de panne de l'un des commutateurs à sélection de longueur d'onde, le trafic de transit peut toujours être transmis de manière transparente à travers l'autre commutateur.

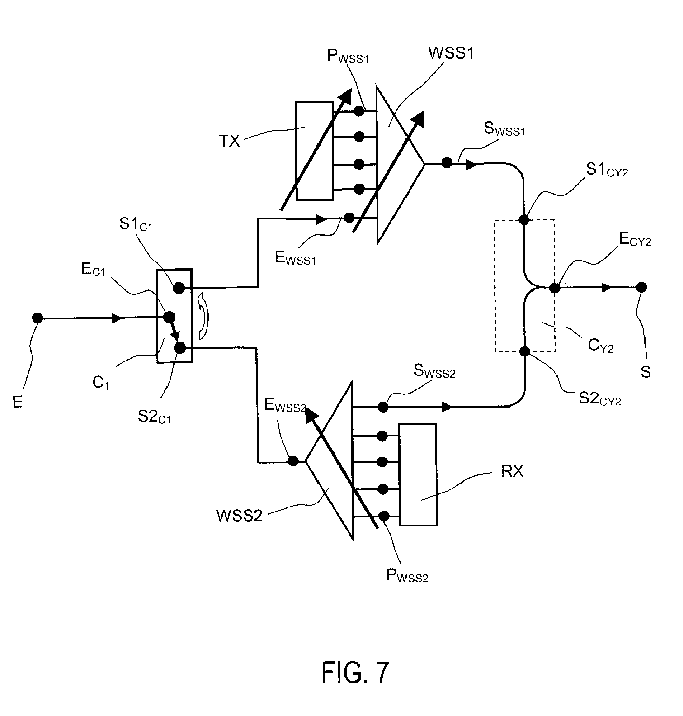

Dans un second mode de réalisation illustré en figure 7, le moyen de liaison est un commutateur spatial agencé de façon que l'entrée E_{C1} dudit commutateur spatial puisse être reliée, sur commande, soit à la sortie S1_{C1}, soit à la sortie S2_{C1} dudit commutateur. Initialement, le commutateur spatial est configuré pour coupler l'entrée du ROADM vers le commutateur à sélection de longueur d'onde WSS2 comme indiqué par la flèche reliant l'entrée E_{C1} à la sortie S2_{C1} sur la figure 7. Ainsi, dans cette configuration, ce commutateur WSS2 traite le trafic en transit ainsi que l'extraction du trafic, tandis que le commutateur WSS1 traite exclusivement l'insertion du trafic. En cas de dysfonctionnement du commutateur WSS2, sur ordre d'une unité de commande, le commutateur spatial C1 relié à l'entrée bascule vers le WSS1 qui traite alors non seulement l'insertion mais également le trafic en transit. Ce second mode de réalisation, plus complexe que celui comportant un coupleur optique passif offre l'avantage d'une perte d'insertion moindre à la traversée de l'ensemble du ROADM.

Ainsi, avec ce type de montage, la perte ou défaillance d'un des deux WSSs est sans conséquence sur la transmission du trafic de données qui continuera de se faire au moyen du WSS encore fonctionnel. D'autre part, les pertes d'insertion liées à l'utilisation des premiers et des seconds moyens de couplage sont du même ordre de grandeur que celles introduites par les commutateurs des dispositifs tels que représentés sur les figures 3 et 4.

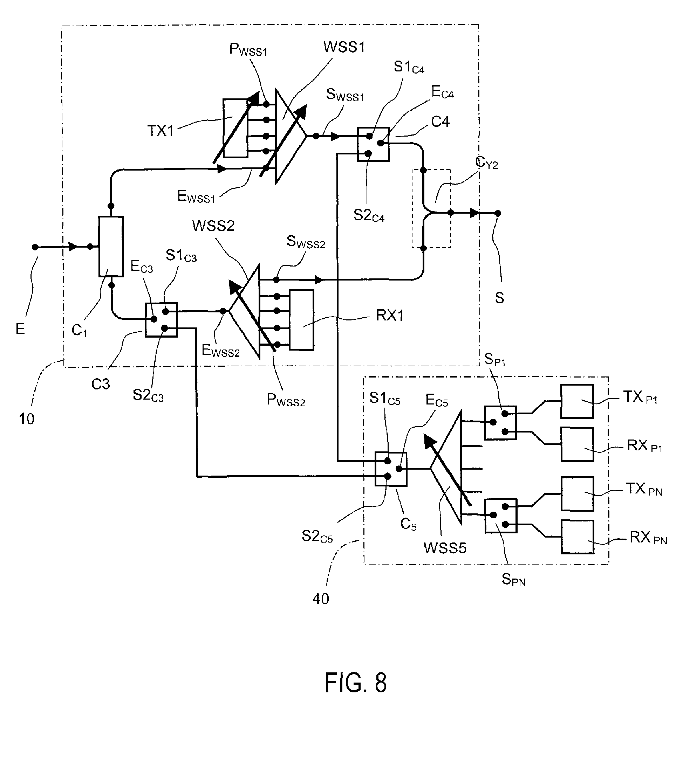

Cependant, il peut être nécessaire de conserver l'intégralité des fonctions, y compris la fonction d'insertion de canal spectral et la fonction d'extraction de canal spectral, en cas de panne d'un des deux commutateurs à sélection de longueur d'onde. Dans ce cas, il est nécessaire adjoindre un ensemble de sécurité. Cet ensemble de sécurité va comprendre essentiellement des commutateurs de sécurité disposés dans le dispositif et des moyens d'insertion/extraction reliés à ces commutateurs. Les commutateurs de sécurité permettent de remplacer la fonction d'insertion ou d'extraction d'un commutateur à sélection spectrale en panne par les moyens d'insertion/extraction. La fonction de traitement du transit peut être assurée comme décrit plus haut. A titre d'exemple non limitatif, le dispositif de multiplexage optique à insertion/extraction sécurisé 10 de la figure 8 comprend :
• Un premier commutateur spatial à deux positions C3 comprenant une entrée commune E_{C3} et deux sorties sélectionnables S1_{C3} et S2_{C3} ;
• Un second commutateur spatial à deux positions C4 comprenant une sortie commune E_{C4} et deux entrées sélectionnables S1_{C4} et S2_{C4} ;
• Un dispositif de sécurité 40 comprenant :
   o un troisième commutateur spatial C5 comprenant un port commun E_{C5} servant d'entrée ou de sortie optique selon l'état de commutation, et deux ports sélectionnables S1_{C5} et S2_{C5} servant respectivement de sortie et d'entrée optique, et
   o des moyens d'insertion/extraction, le port commun E_{C5} du troisième commutateur spatial C5 étant reliée auxdits moyens d'insertion/extraction.

Le premier commutateur C3 est disposé entre le moyen de liaison C1 et le démultiplexeur WSS2. Plus précisément, l'entrée E_{C3} du commutateur C3 est reliée à la sortie S2_{C1} du moyen de liaison C1, la sortie S1_{C3} du commutateur C3 est reliée à une entrée E_{WSS2} du démultiplexeur WSS2 et la sortie S2_{C3} est reliée à l'entrée S2_{C5} du troisième commutateur spatial C5.

De la même façon, le second commutateur C4 est disposé entre le coupleur C_{Y2} et le multiplexeur WSS1. Plus précisément, la sortie E_{C4} du commutateur C4 est relié à l'entrée S1_{CY2} du moyen de liaison C_{Y2}, l'entrée S1_{C4} du commutateur C4 est relié à la sortie S_{WSS1} du multiplexeur WSS1 et l'entrée S2_{C4} est relié à la sortie S1_{C5} du troisième commutateur spatial C5.

Le fonctionnement est le suivant :
Si les deux commutateurs à sélection de longueur d'onde WSS1 et WSS2 fonctionnent correctement, le commutateur C3 est disposé de telle sorte que les signaux venant de l'entrée E traversent nominalement le commutateur WSS2, qui traite à la fois le transit direct et l'extraction de canaux comme précédemment. Le commutateur C4 est disposé de telle sorte que les signaux insérés à travers le commutateur WSS1 atteignent la sortie S. Le commutateur C5 n'est donc pas connecté au dispositif de multiplexage optique à insertion/extraction 10. Son état de commutation est donc sans importance.
Si le commutateur WSS1 est en panne, le commutateur C5 bascule, sous le contrôle d'une unité de commande non représentée, de façon à connecter le port commun E_{C5} au port de sortie S1_{C5} et le commutateur C4 bascule de façon à connecter le port d'entrée S2_{C4} à la sortie commune E_{C4}. Le commutateur à sélection de longueur d'onde WSS1 n'est donc plus connecté à la sortie S. La fonction d'insertion de canaux spectraux peut alors être assurée par les moyens d'insertion du dispositif de sécurité 40.
Si le commutateur WSS2 est en panne, le commutateur C5 bascule, sous le contrôle d'une unité de commande non représentée, de façon à connecter le port commun E_{C5} au port d'entrée S2_{C5} et le commutateur C3 bascule de façon à connecter le port de sortie S2_{C3} à l'entrée commune E_{C3}. Le commutateur à sélection de longueur d'onde WSS2 n'est donc plus connecté à l'entrée E. La fonction d'extraction de canaux spectraux peut alors être assurée par les moyens d'extraction du dispositif de sécurité 40. si un commutateur spatial C1 est prévu, il peut commuter comme indiqué précédemment, afin que le trafic de transit traité initialement par le commutateur WSS2 soit dirigé vers le commutateur WSS1.

Les moyens d'insertion/extraction du dispositif de sécurité 40 peuvent comporter, à titre d'exemple, un cinquième commutateur à sélection de longueur d'onde WSS5, les ports sélectionnables dudit commutateur étant reliés par l'intermédiaire de commutateurs spatiaux de type 1:2 (S_{P1}, S_{PN}) soit à un module de réception (RX_{P1}, RX_{PN}), soit à un module d'émission (TX_{P1}, TX_{PN}). Ce cinquième commutateur à sélection de longueur d'onde peut ainsi être utilisé soit en tant que multiplexeur, soit en tant que démultiplexeur et ainsi se substituer soit au multiplexeur WSS1, soit au démultiplexeur WSS2 pour la fonction d'insertion ou d'extraction respectivement.

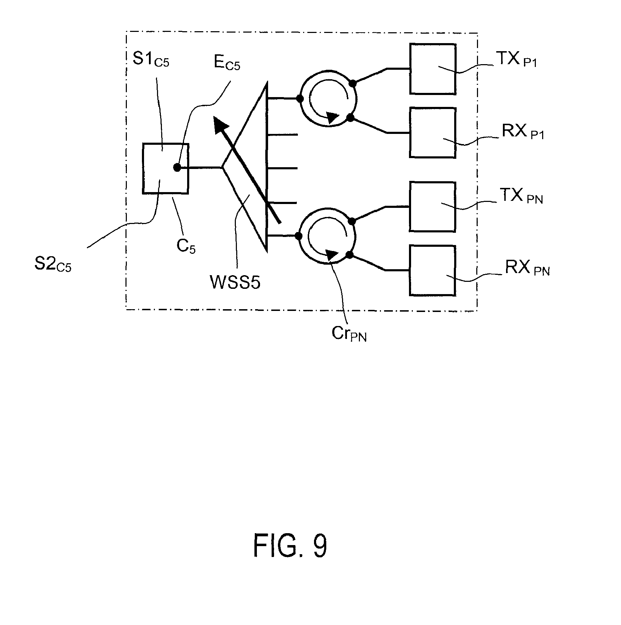

Il est important que l'ensemble de sécurité 40 ait une fiabilité élevée. Aussi, il peut être avantageux, afin d'augmenter la fiabilité de cet ensemble, de remplacer les commutateurs spatiaux (S_{P1}, S_{PN}) par des circulateurs optiques à trois voies (Cr_{P1}, Cr_{PN}) comme indiqué sur la figure 9. Ces circulateurs optiques sont reliés au commutateur WSS5, à un des modules de réception (RX_{P1}, RX_{PN}) et à un des modules d'émission (TX_{P1}, TX_{PN}). Ces circulateurs entièrement passifs ont une fiabilité plus importante que celle des dispositifs commutants.

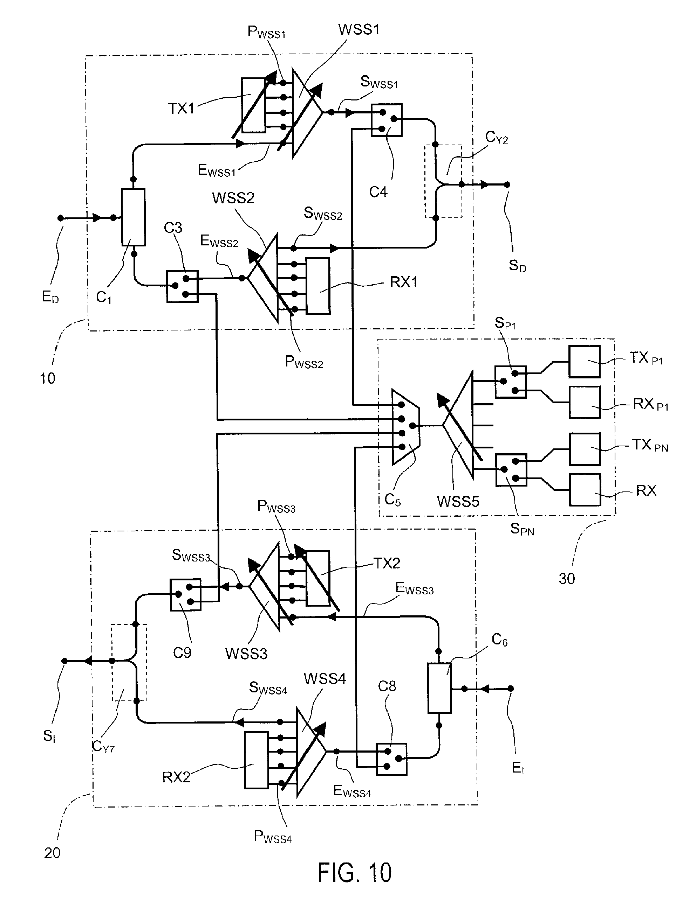

Il est possible, bien entendu, de réaliser des systèmes bi-voies permettant de traiter des signaux bidirectionnels. Ces dispositifs bi-voies peuvent également comporter des dispositifs de sécurité. Dans ce cas, il est intéressant que ces dispositifs de sécurité soient communs. A titre d'exemple non limitatif, la figure 10 représente un tel système bi-voies. Il comprend essentiellement 3 sous-ensembles entourés de pointillés sur la figure 10 qui sont :
• un premier dispositif de multiplexage optique à insertion/extraction mono-voie 10 fonctionnant dans un premier sens ;
• un second dispositif de multiplexage optique à insertion/extraction mono-voie 20, fonctionnant par exemple dans le sens opposé au premier dispositif.
• Un dispositif de sécurité 30 comprenant des commutateurs disposés sur les voies du premier et du second dispositif de multiplexage et un cinquième commutateur à 4 voies et des moyens d'insertion/extraction de secours.

Le premier dispositif 10 est identique à celui décrit à la figure 8. Il comprend un premier commutateur à sélection de longueur d'onde WSS1 couplé à un premier module d'émission TX1, un second commutateur à sélection de longueur d'onde WSS2 couplé à un premier module de réception RX1, des premiers moyens de liaison optique C₁ reliés d'une part à l'entrée optique et d'autre part au port d'entrée E_{WSS1} du premier commutateur WSS1 et au port d'entrée E_{WSS2} du second commutateur WSS2, des seconds moyens de couplage C_{Y2} reliés d'une part à la sortie optique et d'autre part au port de sortie S_{WSS1} du premier commutateur WSS1 et au port de sortie S_{WSS2} du second commutateur WSS2.

Le second dispositif 20 est essentiellement identique au dispositif 10, mais il peut avoir une orientation quelconque par rapport à ce dernier. Dans l'exemple représenté, les signaux optiques transitent dans des sens opposés à travers le dispositif 10 et le dispositif 20. Le dispositif 20 comprend un troisième commutateur à sélection de longueur d'onde WSS3 couplé à un second module d'émission TX3, un quatrième commutateur à sélection de longueur d'onde WSS4 couplé à un second module de réception RX2, des troisièmes moyens de liaison C₆ reliés d'une part à l'entrée optique et d'autre part au port d'entrée E_{WSS3} du troisième commutateur WSS3 et au port d'entrée E_{WSS4} du quatrième commutateur WSS4, des quatrièmes moyens de couplage C_{Y7} reliés d'une part à la sortie optique et d'autre part au port de sortie S_{WSS4} du quatrième commutateur WSS4 et au port de sortie S_{WSS3} du troisième commutateur WSS3.

Les commutateurs spatiaux C3, C4, C8 et C9 du dispositif de sécurité sont disposés dans le premier et le second dispositif de multiplexage comme indiqué sur la figure 10. Ils sont positionnés, comme décrit précédemment, de façon que la panne d'un des quatre commutateurs à sélection de longueur d'onde WSS1, WSS2, WSS3 ou WSS4 entraîne, sous le contrôle d'une unité de commande, que la liaison optique entrante ou sortante qui devait aboutir à ou partir de ce commutateur à sélection de longueur d'onde soit remplacée par une liaison vers ou depuis le cinquième commutateur C5. Le commutateur C5 comporte quatre ports sélectionnables qui correspondent respectivement aux quatre commutateurs à sélection de longueur d'onde. Les ports sélectionnables reliés aux commutateurs C4 et C9 servent de sorties optiques pour l'insertion de canaux spectraux. Les ports sélectionnables reliés aux commutateurs C3 et C8 servent d'entrées optiques pour l'extraction de canaux spectraux. Le port commun de ce cinquième commutateur est relié à des moyens d'insertion/extraction. Dans le dispositif de sécurité 30 de la figure 10, ces moyens sont constitués essentiellement par un commutateur à sélection de longueur d'onde supplémentaire WSS5, les sorties dudit commutateur étant reliés par l'intermédiaire de commutateurs spatiaux S_{P1} à S_{PN} soit à des modules de réception RX_{P1} à RX_{PN}, soit à des modules d'émission TX_{P1} à TX_{PN}. En agissant sur les commutateurs spatiaux, il est possible de sélectionner soit les modules d'émission, soit les modules de réception. Ainsi, on réalise au moyen du commutateur à sélection de longueur d'onde WSS5 et des modules d'émission et de réception soit la fonction d'insertion, soit la fonction d'extraction de données. On peut donc par cette disposition pallier toute défaillance de l'un quelconque des commutateurs à sélection de longueur d'onde des deux dispositifs de multiplexage optique à insertion/extraction mono-voie 10 et 20.

L'architecture de la figure 10 peut comporter de nombreuses variantes d'implantation. Bien entendu, les premiers et les troisièmes moyens de liaison peuvent être, comme dans les dispositifs mono-voies précédemment décrits, soit des coupleurs soit des commutateurs spatiaux. Les moyens d'insertion/extraction peuvent être réalisés de manière analogue à la figure 9.

La succession de commutateurs et des coupleurs optiques peut entraîner des pertes conséquentes. Ces pertes peuvent facilement être compensées par des amplificateurs de façon à retrouver des niveaux de signal satisfaisants.

## Revendications

1. Dispositif de multiplexage optique à insertion/extraction comportant au moins une entrée optique (E) et une sortie optique (S), les signaux optiques circulant de l'entrée optique vers la sortie optique, ledit dispositif comprenant :
• Un premier commutateur à sélection de longueur d'onde utilisé en tant que multiplexeur (WSS1) possédant au moins un premier port d'entrée (E_{WSS1}), un premier port de sortie (S_{WSS1}), et au moins un port dédié à l'insertion de signaux (P_{WSS1}) ; ledit premier commutateur à sélection de longueur d'onde étant apte à réaliser une fonction de multiplexage programmable sur des canaux spectraux dont les fréquences optiques sont alignées sur une grille prédéterminée,
• Un second commutateur à sélection de longueur d'onde (WSS2) utilisé en tant que démultiplexeur possédant au moins un second port d'entrée (E_{WSS2}), un second port de sortie (S_{WSS2}) et au moins un port dédié à l'extraction de signaux (P_{WSS2}); ledit second commutateur à sélection de longueur d'onde étant apte à réaliser une fonction de démultiplexage programmable sur des canaux spectraux dont les fréquences optiques sont alignées sur ladite grille prédéterminée,
**caractérisé en ce que** le dispositif comporte également :
• Un moyen de liaison (C₁) comprenant une entrée (E_{C1}) et deux sorties (S1_{C1}, S2_{C1}), ladite entrée (E_{C1}) étant reliée à l'entrée optique (E) du dispositif de multiplexage, lesdites sorties étant reliées respectivement au premier port d'entrée (E_{WSS1}) du premier commutateur à sélection de longueur d'onde (WSS1) et au second port d'entrée (E_{WSS2}) du second commutateur à sélection de longueur d'onde (WSS2) ;
• Un coupleur optique (C_{Y2}) comprenant une sortie (E_{C2}) et deux entrées (S1_{C2}, S2_{C2}), ladite sortie (E_{C2}) étant reliée à la sortie optique (S) du dispositif de multiplexage, lesdites entrées (S1_{CY2}, S2_{CY2}) étant reliées respectivement au premier port de sortie (S_{WSS1}) du premier commutateur à sélection de longueur d'onde (WSS1) et au second port de sortie (S_{WSS2}) du second commutateur à sélection de longueur d'onde (WSS2).

2. Dispositif de multiplexage optique à insertion/extraction selon la revendication 1, **caractérisé en ce que** le moyen de liaison est un commutateur spatial agencé de façon que l'entrée (E_{C1}) dudit commutateur spatial puisse être reliée, sur commande, soit à l'une, soit à l'autre des sorties (S1_{C1}, S2_{C1}) dudit commutateur.

3. Dispositif de multiplexage optique à insertion/extraction selon la revendication 2, **caractérisé en ce qu'**il comprend une unité de commande apte à commander ledit commutateur spatial (C1) de manière à diriger les signaux entrants vers le second commutateur à sélection de longueurs d'onde (WSS2) dans un état normal, et à diriger les signaux entrants vers le premier commutateur à sélection de longueurs d'onde (WSS1) en cas de panne du second commutateur à sélection de longueurs d'onde.

4. Dispositif de multiplexage optique à insertion/extraction selon la revendication 1, **caractérisé en ce que** le moyen de liaison est un coupleur optique agencé de façon que l'entrée (E_{C1}) dudit coupleur soit reliée aux deux sorties (S1_{C1}, S2_{C1}) dudit coupleur.

5. Dispositif de multiplexage optique à insertion/extraction selon l'une des revendications précédentes, **caractérisé en ce qu'**il comprend également :
• Un premier commutateur spatial à au moins deux positions (C3) comprenant une entrée commune (E_{C3}) et deux sorties sélectionnables (S1_{C3}, S2_{C3}) ;
• Un deuxième commutateur spatial à au moins deux positions (C4) comprenant une sortie commune (E_{C4}) et deux entrées sélectionnables (S1_{C4}, S2_{C4}) ;
• Un dispositif de sécurité (30, 40) comprenant :
o un troisième commutateur spatial (C5) comprenant un port commun (E_{C5}) et deux ports sélectionnables (S1_{C5} , S2_{C5}) et
o des moyens d'insertion/extraction ;
l'entrée commune (E_{C3}) du premier commutateur spatial (C3) étant reliée à une première sortie (S2_{C1}) du moyen de liaison (C1), une première sortie (S1_{C3}) du premier commutateur spatial (C3) étant reliée à l'entrée (E_{WSS2}) du démultiplexeur (WSS2), une deuxième sortie (S2_{C3}) du premier commutateur spatial étant reliée à un premier port sélectionnable (S2_{C5}) du troisième commutateur spatial (C5), la sortie commune (E_{C4}) du deuxième commutateur spatial (C4) étant reliée à une première entrée (S1_{CY2}) du coupleur optique (C_{Y2}), une première entrée (S1C₄) du deuxième commutateur spatial (C4) étant reliée à la sortie (S_{WSS1}) du multiplexeur (WSS1), une deuxième entrée (S2_{C4}) du deuxième commutateur spatial étant reliée à un deuxième port sélectionnable (S1_{C5}) du troisième commutateur spatial (C5), le port commun (E_{C5}) du troisième commutateur spatial (C5) étant reliée auxdits moyens d'insertion/extraction.

6. Système de multiplexage optique à insertion/extraction comportant deux voies, chaque voie comportant un dispositif de multiplexage optique à insertion/extraction (10, 20) selon la revendication 5, **caractérisé en ce que** le dispositif de sécurité (30) est commun aux deux voies, le troisième commutateur spatial (C5) comportant quatre ports sélectionnables reliés respectivement à la deuxième sortie du premier commutateur spatial (C3, C8) de chacun desdits dispositifs de multiplexage optique à insertion/extraction (10, 20) et à la deuxième entrée du deuxième commutateur spatial (C4, C9) de chacun desdits dispositifs de multiplexage optique à insertion/extraction (10, 20).

7. Système de multiplexage optique à insertion/extraction selon la revendication 6, **caractérisé en ce que** la première voie est destinée à traiter des signaux optiques se propageant dans un premier sens et la seconde voie est destinée à traiter des signaux optiques se propageant dans le sens opposé.

8. Système de multiplexage optique à insertion/extraction selon l'une des revendications 5 à 7, **caractérisé en ce que** les moyens d'insertion/extraction du dispositif de sécurité comportent un commutateur à sélection de longueur d'onde supplémentaire (WSS5), un module de réception (RX_{P1}, RX_{PN}), un module d'émission (TX_{P1}, TX_{PN}) et des commutateurs spatiaux (S_{P1}, S_{PN}) pour relier sélectivement les ports sélectionnables dudit commutateur à sélection de longueur d'onde supplémentaire soit au module de réception (RX_{P1}, RX_{PN}), soit au module d'émission (TX_{P1}, TX_{PN}).

9. Système de multiplexage optique à insertion/extraction selon l'une des revendications 5 à 7, **caractérisé en ce que** les moyens d'insertion/extraction du dispositif de sécurité comportent un commutateur à sélection de longueur d'onde supplémentaire (WSS5), un module de réception (RX_{P1}, RX_{PN}), un module d'émission (TX_{P1}, TX_{PN}) et des circulateurs optiques à trois voies (Cr_{P1}, Cr_{PN}) reliant les ports sélectionnables dudit commutateur à sélection de longueur d'onde supplémentaire au module de réception (RX_{P1}, RX_{PN}) et au module d'émission (TX_{P1}, TX_{PN}).

10. Dispositif de multiplexage optique à insertion/extraction selon l'une des revendications 5 à 9, **caractérisé en ce qu'**il comprend une unité de commande apte à commander les premier, deuxième et troisième commutateurs spatiaux (C3, C4, C5) de façon qu'en cas de panne d'un des deux ou des quatre commutateurs à sélection de longueur d'onde, la fonction d'insertion ou d'extraction dudit commutateur à sélection de longueur d'onde en panne soit assurée par les moyens d'insertion/extraction du dispositif de sécurité.
